# EUROPEAN PATENT APPLICATION

(11) **EP 4 394 127 A1**
(43) Date of publication of application: **03.07.2024**
(21) Application number: 22383322.9
(22) Date of filing: 30.12.2022
(51) Int. Cl.: D21H 19/82, B32B 29/00, D21H 27/10, D21H 27/32, B65D 81/34

(54) **BIODEGRABLE, RECYCLABLE AND HEAT-SEALABLE MATERIAL SUITABLE FOR FOOD USE AND RECYCLABLE FOOD CONTAINER MADE OF SAID MATERIAL**

(71) Applicant: Graficas Salaet, S.A, 43780 Gandesa (ES)
(72) Inventor: Salaet Cervera, Elena, 43780 Gandesa (ES); Aubà Bases, David, 43780 Gandesa (ES)
(74) Representative: Espiell Gomez, Ignacio

(57) **Abstract**

The present invention relates to a biodegradable, recyclable and heat-sealable material suitable for food use, and to a recyclable food container made of said material, wherein the material (1) comprises: a lower cardboard layer (2), an intermediate gluing layer (3), and an upper paper layer (4) with a surface coating (41) as a waterproof barrier made of a non-plastic, silicone-free, non-stick varnish of vegetable origin; and the container (10), which is suitable for conventional ovens, microwave ovens and freezing, has the shape of a tray, bowl or similar and is made of a material (1) comprising a lower cardboard layer (2), an intermediate gluing layer (3) and an upper paper layer (4) with a surface coating (41) as a waterproof barrier made of a non-plastic, silicone-free, non-stick varnish of vegetable origin, which can have a heat-sealed closing lid (11) made of plastic film, paper or cardboard.

## Description

### OBJECT OF THE INVENTION

The invention, as expressed in the title of this specification, relates to a biodegradable, recyclable and heat-sealable material suitable for food use, and to a recyclable food container made of said material, providing features and advantages with respect to the purpose for which they are intended, described in detail below and representing an improvement to the current state of the art.

The object of the present invention is a recyclable material suitable for food use, in particular for use in food containers, and specifically relates to a laminated biodegradable material made of paper, with optional anti-grease and anti-moisture treatments and cardboard without plastic or silicone, with multiple possibilities for optional external printing, which is suitable to be heated in a conventional oven and in a microwave oven, as well as to be frozen, with the advantageous feature in that it is also suitable to have a lid adhered to the same by means of a heat-sealed closure, a second aspect of the invention being a container for food products, in the form of a tray, bowl or similar made with said material, which is closed at the top by a lid made of heat-sealing plastic film, or made of paper or cardboard with a heat-sealing varnish, such that once the container is used, the tray can be discarded as cardboard waste, since it is completely biodegradable, and the lid can be separated as plastic waste.

### FIELD OF APPLICATION OF THE INVENTION

The field of application of the present invention falls within the industry sector of manufacturing materials for food use, in particular manufacturing food containers, specifically the field of containers for freezing and heating and/or vice versa, as well as on containers with heat-sealed closures.

### BACKGROUND OF THE INVENTION

Currently, the materials used for food containers consist of metals, paper, cardboard, glass and plastic, plastic materials being the most widely used (37%) due to the lightness, flexibility and economic nature thereof, compared to other materials, such as cardboard, tins or glass. Moreover, plastic materials improve the safety and preservation of food, are easy to transport and comfortable for the consumer.

However, plastic containers are a problem for the environment, as they is made of chemicals and petroleum, and they decompose slowly, sometimes never fully decomposing. Since only part of plastic waste is recycled, valuable raw materials end up being lost and, moreover, the incineration of this waste to generate energy causes CO₂ emissions. In Europe, containers account for 60% of all plastic waste, and the total amount of this plastic waste grows 2% annually. The pollution caused by plastic in the oceans is devastating and, in general, the impact plastic has on the environment on a global level is highly detrimental.

This explains the recent trends of developing food containers made of materials such as cardboard, which avoids or reduces the use of plastic as much as possible. In this sense, food containers made from cardboard and paper are known. However, it is important for these types of containers to be resistant to heat and freezing, since they are usually used for products that can be directly frozen, without being removed from the container, and/or heated, either in a conventional oven or microwave oven, some of the products being precooked. To this end, these containers must be made of materials capable of withstanding a very wide range of temperatures without deteriorating and without spilling liquids or grease, which is why they usually have a waterproof coating with anti-grease and anti-moisture treatments. In addition, these containers must also be able to be hermetically closed with a lid, which is optionally transparent, easy to put on, and resistant to oven temperatures and freezing, the most economical and practical solution being a heat-sealed film closure.

The heat sealing of food products is a method of closing containers by applying pressure and heat to a plastic film, or paper or cardboard treated with a heat-sealable varnish, by means of a heat sealer. it is also known as thermal sealing and is used to isolate products stored in containers from air and other external agents, such as bacteria and microbes.

The problem lies in the fact that nowadays tray-shaped cardboard containers with heat-sealed closures usually have a plastic coating that allows said heat-sealing to be carried out, and thus the container is not biodegradable, since said plastic coating, which always remains attached to the container itself, makes the recycling process of the container difficult, given that it has a mixture of cardboard and plastic.

Moreover, when instead of a plastic coating the container has a waterproof coating, for example a silicone coating, although suitable for baking and freezing, given that it is not plastic, this type of coating is not suitable for having a heat-sealed film closing lid applied to the same, and is therefore not suitable for tray-type containers with a transparent film lid.

The objective of the present invention is therefore to develop an improved material for manufacturing food containers that is recyclable and allows a heat-sealed closure to be applied, in other words, a tray-type container made of paper and cardboard with a non-plastic waterproof coating, able to withstand the high temperatures of a conventional oven and microwave oven, as well as freezing temperatures, and which additionally allows a transparent plastic film lid or a heat-sealable paper or cardboard, or a cardboard with laminated film to be applied by means of heat sealing, allowing for a proper recycling of both parts of the container once used; the tray as biodegradable waste and the lid as plastic or cardboard waste, depending on the type of material the lid is made of.

Furthermore, in reference to the current state of the art, it should be noted that the existence of any other material or recyclable food container which has technical features equal or similar to those of the material and container claimed herein are unknown, at least by the applicant.

### DESCRIPTION OF THE INVENTION

The biodegradable, recyclable and heat-sealable material suitable for food use and the recyclable food container made of said material, proposed by the invention, are configured as an optimal solution for the aforementioned objective and represent an improvement to the current state of the art, the characterising details that distinguish the invention conveniently included in the final claims that accompany this description.

Specifically, according to a first aspect of the invention, proposed is a recyclable material suitable for food use, mainly for food containers, for example in the form of a tray, in multiple shapes, sizes and designs, although in a non-limiting manner, and specifically, a laminated biodegradable material with an anti-grease effect and an anti-moisture barrier, made of paper and cardboard which, being suitable for heating in a conventional oven and microwave oven, as well as for freezing, is also suitable to have a hermetic closing lid adhered to the same, which can be made of transparent film, or treated paper or cardboard, by means of a heat-sealed closure.

To this end, said material essentially comprises:
- a lower cardboard layer, which provides it with resistance,
- an intermediate gluing layer, which joins the lower layer to the upper layer, and
- an upper paper layer which, in turn, has a surface coating that constitutes a waterproof barrier formed by a non-plastic, silicone-free, non-stick varnish of vegetable origin, which is suitable for food use, as well as for conventional and microwave ovens, and for freezing and heat-sealing. In addition, this paper layer be in different colours, which are not obtained by printing paper, but by the ingredients of the composition thereof.

Preferably, but in a non-limiting manner, the upper paper layer is a Pergo-release^{®} food grade-type paper layer, made by the Pfleiderer company.

Preferably, the lower cardboard layer is a layer of SBS (*Solid Bleached Sulphate*) cardboard.

Preferably, but in a non-limiting manner, the intermediate gluing layer is a layer of glue by the Henkel^{®} brand with 5% of Loctite^{®} hardener.

In a preferred embodiment, the upper paper layer has a grammage between 40 and 150 g/m² and the lower cardboard layer is preferably between 190 and 430 g/m².

Furthermore, a second aspect of the invention relates to a container suitable for food use in the form of a tray, bowl or similar, made from the material described above, meaning a lower cardboard layer, an intermediate gluing layer and an upper paper layer with a surface coating as a waterproof barrier based on a non-plastic, silicone-free, non-stick varnish of vegetable origin, which is suitable for conventional ovens, microwave ovens, freezers and also suitable for heat-sealing, whereby said container is advantageously capable of incorporating a heat-sealed closing lid made of plastic film, paper or cardboard.

It should be noted that the aforementioned grammages for the material are also preferred for the container, given that if the paper layer has a lower grammage, it may not provide a sufficient barrier against grease and moisture. In turn, the aforementioned grammage of the cardboard is also preferred, since it must have forming properties and, at the same time, be able to be thermoformed in a machine envisaged for this purpose, which are only able to work with specific thicknesses. Thus, the composition of paper and cardboard will preferably be a maximum of 600 g/m².

in any case, the effect achieved is a heat-sealable tray container without plastic film, suitable for both conventional and microwave ovens and also for freezing. Once the consumer has consumed the product, they can throw the tray into the cardboard bin, since there is no plastic in the cardboard, and throw the lid into the corresponding recycling container, depending on the material it is made of; in the plastic bin if said lid is made of plastic film, or in the cardboard bin if it is made of paper or cardboard. The recyclability of the container is therefore complete.

In short, the material and container made of heat-sealable cardboard and paper of the invention fulfil the aforementioned objectives with regard to food safety and sustainability:
- Waterproofing: Allowing for the preservation of prepared foods that may contain liquids or have a high moisture content.
- Resistance under extreme conditions: Resistant to freezing and cooking (temperatures above 200 °C).
- High recyclability (greater than 90%): low level of pollution, and use of raw materials mainly from renewable sources.
- Harmless to human health.
- Heat-sealing ability without the use of plastic.

### DESCRIPTION OF THE DRAWINGS

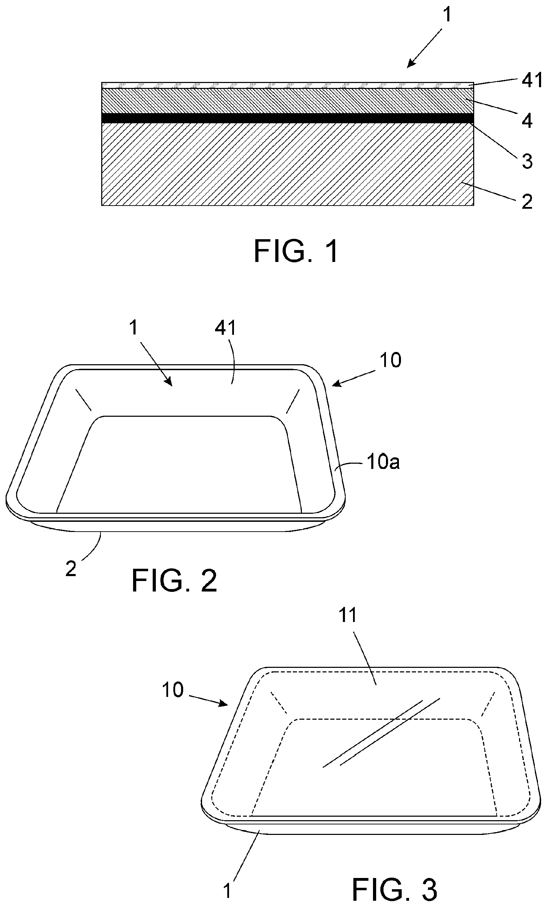

To complete the description provided herein, and for the purpose of helping to make the features of the invention more readily understandable, this description is accompanied by a set of drawings constituting an integral part of the same, which by way of illustration and not limitation represents the following:
Figure number 1 shows a schematic cross-sectional view of a portion of the biodegradable, recyclable and heat-sealable material suitable for food use object of the invention, showing the parts and elements it comprises;
Figure number 2 shows a schematic perspective view of an exemplary embodiment of a recyclable food container according to the invention, specifically an example in the form of a tray, made with the biodegradable material of figure 1; and
Figure number 3 shows a schematic view of the container of the invention shown in figure 2, in this case including the heat-sealed closing lid.

### PREFERRED EMBODIMENT OF THE INVENTION

in view of the aforementioned figures, and in accordance with the adopted numbering, one may observe therein non-limiting exemplary embodiments of the biodegradable material and recyclable food container of the invention, comprising what is described in detail below.

Thus, as can be seen in figure 1, the material (1) for food use object of the invention, for example for manufacturing containers (10) suitable for conventional ovens, microwave ovens, freezing and heat sealing, comprises at least:
- a lower cardboard layer (2),
- an intermediate gluing layer (3), which joins the lower layer (2) to the upper layer (4), and
- an upper paper layer (4) which, in turn, comprises a coating (41) that makes up a waterproof barrier made of a non-plastic, silicone-free, non-stick varnish of vegetable origin, which can be in different colours.

It is important to emphasise that said coating (41) covers the entire upper surface of the upper paper layer (4).

Preferably, the upper paper layer (4) is a paper for food use of the Pergo-release^{®} type or other types with similar properties.

Preferably, the lower cardboard layer (2) is made of SBS cardboard.

Preferably, the intermediate gluing layer (3) is a Henkel^{®} brand glue with 5% Loctite^{®} hardener or another with similar properties.

In the preferred embodiment, the upper paper layer (4) has a grammage between 40 and 150 g/m² and the lower cardboard layer (2) has a grammage between 190 and 430 g/m². Figure 1 shows a representation of the material, the proportions of each layer exaggerated to facilitate the observation thereof.

In turn, figure 2 shows an example of the container (10) suitable for food use in the form of a tray, bowl or similar, made of the aforementioned material (1), meaning with a lower cardboard layer (2), an intermediate gluing layer (3) and an upper paper layer (4) with a coating (41) as a waterproof barrier made of a non-plastic, silicone-free, non-stick varnish of vegetable origin in different possible colours which, as can be seen in figure 3, can incorporate a heat-sealed closing lid (11), which can be made of plastic film or paper or cardboard with a varnish treatment for heat-sealing, also being suitable for conventional ovens, microwave ovens, and for freezing, as well as for said heat sealing.

Logically, the lower portion of the container (10), in other words, where the lower cardboard layer (2) is located, is on the external part of the tray, and the upper portion, meaning where the upper paper layer (4) with the waterproof coating (41) is located, is on the inner part of the tray, where the food or product to be packaged is placed.

In turn, the heat sealing is done on a perimeter edge (10a), provided for this purpose on the container (10) in the form of a tray or similar, wherein said tray defines a flat surface on the upper portion thereof and, therefore, a surface with the coating (41) on the upper paper layer (4), to which, with a heat sealer, pressure and heat can be applied, thereby fusing it with the edge of the closing lid material (1).

It should be noted that the aforementioned closing lid (11) can be a heat-sealed plastic film lid, or also a cardboard lid with laminated film of different thicknesses (from 8 mils to 60 mils), or a cardboard or paper lid with a heat-sealable varnish applied. In any case, the container can be perfectly recycled since the lower portion can be taken to the paper and cardboard recycling bin, since it does not contain plastic, and the lid can be taken to the corresponding bin, depending on whether it is plastic, paper or cardboard.

Having sufficiently described the nature of the present invention, as well as the ways in which it may be implemented, it is not considered necessary to expand the explanation thereof in order for a person skilled in the art to understand the scope of the invention and the advantages derived therefrom.

## Claims

1. A biodegradable, recyclable and heat-sealable material suitable for food use which, being applicable for food use, such as for manufacturing containers (10), and suitable for conventional ovens, microwave ovens, freezing and heat sealing, is **characterised in that** it comprises:
- a lower cardboard layer (2),
- an intermediate gluing layer (3), which joins the lower layer (2) to the upper layer (4), and
- an upper paper layer (4) which, in turn, comprises a coating (41) that makes up a waterproof barrier made of a non-plastic, silicone-free, non-stick varnish of vegetable origin in different possible colours.

2. The biodegradable, recyclable and heat-sealable material suitable for food use, according to claim 1, **characterised in that** the upper paper layer (4) is a paper for food use.

3. The biodegradable, recyclable and heat-sealable material suitable for food use, according to claim 1 or 2, **characterised in that** the lower cardboard layer (2) is SBS cardboard.

4. The biodegradable, recyclable and heat-sealable material suitable for food use, according to any of the preceding claims, **characterised in that** the intermediate gluing layer (3) is a glue.

5. The biodegradable, recyclable and heat-sealable material suitable for food use, according to any of the preceding claims, **characterised in that** the upper layer (4) has a grammage between 40 and 150 g/m².

6. The biodegradable, recyclable and heat-sealable material suitable for food use, according to any of the preceding claims, **characterised in that** the lower cardboard layer (2) has a grammage between 190 and 430 g/m².

7. A recyclable food container made of biodegradable material suitable for food use which, being suitable for conventional ovens, microwave ovens and freezing, is **characterised in that** it consists of a container (10) in the form of a tray, bowl, or similar, made of a material (1) comprising a lower cardboard layer (2), an intermediate gluing layer (3) and an upper paper layer (4) with a surface coating (41) as a waterproof barrier made of a non-plastic, silicone-free, non-stick varnish of vegetable origin, suitable for heat sealing.

8. The recyclable food container made of biodegradable material suitable for food use, according to claim 7, **characterised in that** it has a heat-sealed closing lid (11), which can be made of plastic film or paper or cardboard with a varnish treatment for heat-sealing.
